# EUROPEAN PATENT APPLICATION

(11) **EP 4 621 811 A1**
(43) Date of publication of application: **24.09.2025**
(21) Application number: 24165319.5
(22) Date of filing: 21.03.2024
(51) Int. Cl.: H01F 3/14, H01F 27/38, H01F 27/28, H02M 1/00, H02M 3/00

(54) **HIGH POWER HIGH CURRENT TRANSFORMER**

(71) Applicant: Delta Electronics (Thailand) Public Co., Ltd., Samutprakarn 10280 (TH)
(72) Inventor: Njiende, Hugues, 33102 Paderborn (DE); Figge, Heiko, 59964 Medebach (DE)
(74) Representative: Keller Schneider Patent- und Markenanwälte AG

(57) **Abstract**

The invention relates to an *N-*phase transformer assembly (1, 1'-1""") with *N* phases for an *N-*phase LLC resonant converter, with *N* being a natural number greater than or equal to one. The *N-*phase transformer assembly (1, 1'-1""") comprises (i) a soft-magnetic core structure (2'-2‴‴), which soft-magnetic core structure comprises *N* openings (3, 3') passing through the soft-magnetic core structure and a closed-loop magnetic path (13) around each of the *N* openings (3, 3'), wherein at least one air gap (6) is present within the soft-magnetic core structure (2'-2‴‴), and (ii) *N* primary windings (4', 4", 4‴) and *N* secondary windings (5', 5", 5‴). The *N* primary windings and the *N* secondary windings correspond to a) each other in a bijective manner, to b) the *N* openings (3, 3') in a bijective manner and to c) the *N* phases in a bijective manner, wherein each primary winding of the *N* primary windings (4', 4", 4‴) is wound in such a way around the soft-magnetic core structure (2'-2‴‴) that it passes through the corresponding opening (3, 3'), wherein the *N* secondary windings (5', 5", 5‴) are not wound around the soft-magnetic core structure (2'-2‴‴) and each secondary winding of the *N* secondary windings (5', 5", 5‴) passes through the corresponding opening (3, 3'), wherein the corresponding primary winding and corresponding secondary winding pass through a same opening of the *N* openings (3, 3') and are part of a same phase of the *N* phases. For each phase of the *N* phases, (i) the corresponding primary winding is distanced from the corresponding secondary winding to provide through leakage a resonant inductance for a resonant tank of the LLC resonant converter, and the soft-magnetic core structure is designed to provide a magnetising inductance for the resonant tank of the LLC resonant converter.

## Description

### Technical Field

The invention relates to an *N*-phase transformer assembly with *N*phases for an *N-*phase LLC resonant converter. The invention also relates to the *N*-phase LLC resonant converter comprising the *N*-phase transformer assembly according to the invention.

### Background Art

It is one of the fundamental trends of modern electronics to miniaturise electronic components while at the same time increasing their performance. Transformers play a crucial role in modern electronics for changing AC voltage levels or for providing galvanic isolation between circuits, for example. In many applications, transformers need to be able to provide high power and large currents, for example for charging batteries of battery-electric or hybrid-electric vehicles or for powering servers of large data centres.

The size of transformers is typically determined by the magnetic core around which the electromagnetic coils of transformers are wound. In order to provide compact transformers with reduced core losses, the miniaturisation and design of magnetic cores of transformers has been studied in detail in the prior art.

LLC resonant converters are frequently used DC-to-DC converters as soft switching may be used with such converters, with soft switching reducing losses during power conversion. A highly important component of LLC resonant converters are transformers.

Transformers as known in the prior art which are specifically designed for LLC resonant converters are typically not optimised for high currents. Accordingly, transformers as known in the prior art for LLC resonant converters are typically not optimised for applications requiring large currents and hence suffer from higher losses when used in such application scenarios.

### Summary of the invention

It is the object of the invention to create a transformer assembly for an LLC resonant converter which mitigates at least some of the disadvantages of transformer assemblies as known in the prior art. In particular, it is an object of the invention to create a compact transformer assembly for an LLC resonant converter that is capable of providing large currents.

The solution of the invention is specified by the features of claim 1. The invention relates to an *N*-phase transformer assembly with *N* phases for an *N*-phase LLC resonant converter, with *N* being a natural number greater than or equal to one. The *N*-phase transformer assembly comprises (i) a soft-magnetic core structure, which soft-magnetic core structure comprises *N* openings passing through the soft-magnetic core structure and a closed-loop magnetic path around each of the *N* openings, wherein at least one air gap is present within the soft-magnetic core structure, and (ii) *N* primary windings and *N* secondary windings, with the *N* primary windings and the *N* secondary windings corresponding to a) each other in a bijective manner, to b) the *N* openings in a bijective manner and to c) the *N* phases in a bijective manner. Each primary winding of the *N* primary windings is wound in such a way around the soft-magnetic core structure that it passes through the corresponding opening. The *N* secondary windings are not wound around the soft-magnetic core structure and each secondary winding of the *N* secondary windings passes through the corresponding opening. The corresponding primary winding and corresponding secondary winding pass through a same opening of the *N* openings and are part of a same phase of the *N* phases. For each phase of the *N* phases, (i) the corresponding primary winding is distanced from the corresponding secondary winding to provide through leakage a resonant inductance for a resonant tank of the LLC resonant converter, and (ii) the soft-magnetic core structure is designed to provide a magnetising inductance for the resonant tank of the LLC resonant converter.

The *N*-phase transformer assembly according to the invention may be used in a one-phase system or in a multiphase system comprising at least two phases. The *N*-phase transformer assembly may in particular be embodied as a one-phase, two-phase or three-phase transformer assembly. When used in an LLC resonant converter, the different phases are provided by switching structures of the LLC resonant converter.

The *N*-phase transformer assembly according to the invention is specifically designed for an *N*-phase LLC resonant converter. LLC resonant converters are resonant converters with a resonant tank comprising inductors and capacitors, which resonant tank is designed to resonate at a specific frequency and which resonant tank is connected to a transformer. LLC resonant converters are used for DC-to-DC power conversion. LLC resonant converters are suitable for high switching frequencies and typically have low switching losses as soft switching is possible. Accordingly, LLC resonant converters are suitable for high-power applications and may be employed as part of a charging infrastructure for charging batteries of battery-electric vehicles or hybrid-electric vehicles, for example, or for powering servers of data centres. The *N*-phase transformer assembly according to the invention may be preferentially used in such high-power applications as part of an *N*-phase LLC resonant converter.

The resonant tank of an LLC resonant converter typically comprises a resonant inductor placed electrically in series with (i) a resonant capacitor and (ii) the primary windings of a transformer connected to the resonant tank, and a magnetising inductor placed electrically in parallel to the primary windings of said transformer. For an *N*-phase LLC resonant converter, each phase of the *N*-phase LLC resonant converter may comprise its own resonant capacitor, resonant inductor and magnetising inductor.

The *N*-phase transformer assembly according to the invention is designed to provide resonant inductances and magnetising inductances for the resonant tank of an *N*-phase LLC resonant converter. The *N*-phase transformer assembly according to the invention therefore advantageously allows the assembly of compact *N*-phase LLC resonant converters. Required resonant inductances are provided by deliberately increasing leakage inductances in the *N-*phase transformer assembly by suitably distancing the primary windings from the corresponding secondary windings. Required magnetising inductances are provided by suitably placed air gaps in the soft-magnetic core structure, with such air gaps also delaying the onset of saturation in the soft-magnetic core structure. Suitable choices of soft-magnetic materials used for the soft-magnetic core structure, in particular relating to the relative magnetic permeability of soft-magnetic materials, may also influence magnetising inductances. The at least one air gap therefore provides required magnetising inductances for the resonant tank of an *N*-phase LLC resonant converter and mitigates saturation of the soft-magnetic core structure.

Soft-magnetic materials are materials that can be easily magnetised by an external magnetic field, the magnetisation in soft-magnetic materials producing a much stronger magnetic flux density in the soft-magnetic material than the magnetic flux density of the external magnetic field in air. Compared to hard-magnetic materials, soft-magnetic materials have small hysteresis losses. As soft-magnetic materials for the soft-magnetic core structure, for example ferrites, in particular manganese-zinc ferrites or nickel-zinc ferrites, or other materials with high magnetic permeability may be used. Cores known in the prior art as ferrite cores, amorphous cores, nanocrystalline cores or pressed-powder cores are for example suitable as well for assembling the soft-magnetic core structure.

Each primary winding of the *N* primary windings has a corresponding secondary winding of the *N* secondary windings, there being a one-to-one relationship between the *N* primary windings and the *N* secondary windings. The pairs of corresponding primary and secondary windings are in turn in a one-to-one relationship with the *N* phases and in a one-to-one relationship with the *N* openings. Accordingly, there is also a one-to-one relationship between the *N* openings and the *N* phases.

Each primary winding of the *N* primary windings is wound in such a way around the soft-magnetic core structure that it passes through its corresponding opening. Each primary winding may have a number of turns greater than or equal to one, preferentially much larger than one. Each primary winding encloses a section of the soft-magnetic core structure around which section it is wound. When a current, in particular an alternating current, flows through each primary winding, a magnetic field around the primary winding is created, which magnetic field mostly passes through the soft-magnetic core structure due to its high magnetic permeability. The soft-magnetic core structure around each opening is such that a closed-loop magnetic path exists around each opening. The soft-magnetic core structure is accordingly embodied such that most field lines of the magnetic field created by current flowing through each primary winding pass through the soft-magnetic core structure, more specifically along the closed-loop magnetic path around the corresponding opening. The soft-magnetic core structure is preferentially embodied in such a way that all openings have substantially a same shape and size.

Each secondary winding of the *N* secondary windings is not wound around the soft-magnetic core structure and passes through its corresponding opening. The current flowing through each primary winding in turn leads to an electric potential difference between terminals of each secondary winding, at which terminals the respective secondary winding may be connected to an external electric circuit. Preferentially, each secondary winding passes only once through its corresponding opening. When the terminals of a secondary winding are connected to an external electric circuit, large currents, in particular hundreds of ampere, may flow through the secondary winding, in particular in case that the number of turns of the corresponding primary winding is much larger than one. As the secondary windings are not wound around the soft-magnetic core structure, their total length is also reduced: Joule heating in the secondary windings advantageously is thereby reduced. To facilitate the flow of such large currents through the secondary windings, the secondary windings may need to have a sufficient cross-section. The secondary windings as used for the *N*-phase transformer according to the invention may preferentially be formed as a plurality of parallel electrically conductive, in particular metallic, strips separated by electrically insulating material to mitigate the skin effect in the secondary windings. The skin effect may be caused by the high switching frequencies in an LLC resonant converter.

For a three-phase LLC resonant converter in which a three-phase transformer assembly according to the invention may be used, the three primary windings of the three-phase transformer assembly may be connected in a star connection or a delta connection, for example; similarly, for a three-phase LLC resonant converter in which a three-phase transformer assembly according to the invention may be used, the three secondary windings of the three-phase transformer assembly may be connected in a star connection or a delta connection, for example.

Use of a higher number of phases in general may lead to decreased overall losses as power flow may be evenly distributed over the different phases. A larger number of phases in general may require more complicated magnetic and electric circuitry, however, in particular more complicated switching structures for providing inverting and rectification functionality of an LLC resonant converter.

In an embodiment of the *N*-phase transformer assembly according to the invention, each secondary winding of the *N* secondary windings passes once through the corresponding opening.

As the length of each secondary winding may thus be reduced, losses, in particular caused by Joule heating, in the secondary windings may advantageously be reduced, particularly in view of the large currents which may flow through the secondary windings.

In a further embodiment of the *N*-phase transformer assembly according to the invention, each secondary winding of the *N* secondary windings is formed by a plurality of parallel electrically conductive strips, in particular eight electrically conductive strips, wherein between any two parallel electrically conductive strips an electrically insulating material is present.

In a further embodiment of the *N*-phase transformer assembly according to the invention, the *N*-phase transformer assembly further comprises *N* tertiary windings, which N tertiary windings correspond to (i) the *N* phases in a bijective manner, to (ii) the *N* primary windings and the *N* secondary windings in a bijective manner and to (iii) the *N* openings in a bijective manner, wherein each tertiary winding of the *N* tertiary windings is wound in such a way around the soft-magnetic core structure that it passes through the corresponding opening, wherein the corresponding primary winding, the corresponding secondary winding and the corresponding tertiary winding pass through the same opening of the *N* openings and are part of the same phase of the *N* phases.

Each phase of the *N* phases may therefore be associated with a triple comprising a primary winding, a secondary winding and a tertiary winding. Each tertiary winding of the *N* tertiary windings may be wound in such a way around the soft-magnetic core structure that it may pass through its corresponding opening. Each tertiary winding may have a number of turns greater than or equal to one. A corresponding tertiary winding and primary winding may pass through a same opening of the *N* openings. Each tertiary winding may be wound in such a way around the soft-magnetic core structure that the respective closed-loop magnetic path around the opening corresponding to the respective tertiary winding is enclosed by both the respective tertiary winding and the corresponding primary winding. Based on the ratio of the number of turns of a primary winding to the number of turns of the corresponding tertiary winding, the transformer assembly may either function as a step-up or step-down transformer assembly between the primary windings and the tertiary windings. For a three-phase transformer assembly, the tertiary windings may be connected in a star connection or a delta connection, for example. Having both secondary windings and tertiary windings may allow the use of the transformer assembly for providing both a large current at low voltage, via the secondary windings, to one load and a smaller current at higher voltage, via the tertiary windings, to a further load. Such a transformer assembly may be seen as an *N-*phase multiport transformer assembly.

In a further embodiment of the *N*-phase transformer assembly according to the invention, the *N* primary windings and optionally the *N* tertiary windings are made of enamelled wire, or the *N* primary windings and optionally the *N* tertiary windings are made of Litz wire, in particular triple-insulated Litz wire, or the *N* primary windings and optionally the *N* tertiary windings are provided as edgewise-wound coils.

In a further embodiment of the *N*-phase transformer assembly according to the invention, soft-magnetic leakage-enhancing elements are placed into at least one opening of the *N* openings between the primary windings passing through the at least one opening and the secondary windings passing through the at least one opening, and optionally soft-magnetic leakage-enhancing elements are placed into at least one opening of the *N* openings between the secondary windings passing through the at least one opening and the tertiary windings passing through the at least one opening.

Soft-magnetic leakage-enhancing elements may be embodied as ferrite plates, for example. Advantageously, leakage inductances may thus be increased and the *N*-phase transformer assembly may be made more compact as due to leakage-enhancing elements placed into openings distances between the primary windings and the secondary windings may be reduced, for example.

In a further embodiment of the *N*-phase transformer assembly according to the invention, the soft-magnetic core structure comprises a main direction of extent, wherein the main direction of extent passes through the *N* openings.

The *N*-phase transformer assembly may thus extend along a main direction of extent. An *N-*phase transformer assembly may thus be simply modified to an *N+ 1-*phase transformer assembly by appending modular soft-magnetic core structure elements, which provide a further opening, to the soft-magnetic core structure of the *N*-phase transformer.

In a further embodiment of the *N*-phase transformer assembly according to the invention, the soft-magnetic core structure comprises a plurality of soft-magnetic core structure elements, which soft-magnetic core structure elements are arranged consecutively along the main direction of extent so that each soft-magnetic core structure element of the plurality of soft-magnetic core structure elements comprises one or two neighbouring soft-magnetic core structure elements of the plurality of soft-magnetic core structure elements, and each opening of the *N* openings is formed by two neighbouring soft-magnetic core structure elements of the plurality of soft-magnetic core structure elements.

In case the soft-magnetic core structure is made of a plurality of soft-magnetic core structure elements, the soft-magnetic core structure may advantageously be assembled in a simplified manner, in particular in case the soft-magnetic core structure elements correspond to standard shapes that are commercially readily available.

The soft-magnetic core structure may comprise *N* U-shaped soft-magnetic core structure elements and one I-shaped soft-magnetic core structure element, for example, wherein each U-shaped soft-magnetic core structure element of the *N* U-shaped soft-magnetic core structure elements comprises two legs and one yoke, wherein any two neighbouring U-shaped soft-magnetic core structure elements are arranged such that the yoke of one of the two neighbouring U-shaped soft-magnetic core structure elements faces the two legs of the other of the two neighbouring U-shaped soft-magnetic core structure elements, and wherein the two legs of one outer U-shaped soft-magnetic core structure element face the I-shaped soft-magnetic core structure element.

In a further embodiment of the *N*-phase transformer assembly according to the invention, at least one opening of the *N* openings is provided by two neighbouring U-shaped soft-magnetic core structure elements, wherein each of the two neighbouring U-shaped soft-magnetic core structure elements comprises two legs and a yoke, and wherein the two neighbouring U-shaped soft-magnetic core structure elements are arranged such that the yoke of one of the two neighbouring U-shaped soft-magnetic core structure elements faces the two legs of the other of the two neighbouring U-shaped soft-magnetic core structure elements.

In a further embodiment of the *N*-phase transformer assembly according to the invention, at least one opening of the *N* openings is provided by two neighbouring U-shaped soft-magnetic core structure elements, wherein each of the two neighbouring U-shaped soft-magnetic core structure elements comprises two legs and a yoke, and wherein the two neighbouring U-shaped soft-magnetic core structure elements are arranged such that their respective two legs face each other.

In a further embodiment of the *N*-phase transformer assembly according to the invention, at least one opening of the *N* openings is provided by a U-shaped soft-magnetic core structure element and an I-shaped soft-magnetic core structure element, wherein the U-shaped soft-magnetic core structure element comprises two legs and a yoke, and wherein the U-shaped soft-magnetic core structure element and the I-shaped soft-magnetic core structure element are arranged such that the two legs of the U-shaped soft-magnetic core structure element face the I-shaped soft-magnetic core structure element.

In a further embodiment of the *N*-phase transformer assembly according to the invention, at least one opening of the *N* openings is provided by (i) an H-shaped soft-magnetic core structure element and (ii) a neighbouring U-shaped soft-magnetic core structure element or a neighbouring further H-shaped soft-magnetic core structure element, wherein the H-shaped soft-magnetic core structure element comprises four legs and one yoke.

In a further embodiment of the *N*-phase transformer assembly according to the invention, *N* is equal to three. With *N* being equal to three, the *N*-phase transformer corresponds to a three-phase transformer.

In a further embodiment of the *N*-phase transformer assembly according to the invention, the soft-magnetic core structure extends along a simple closed plane curve and surrounds a central hole.

A simple closed plane curve may be defined as a plane curve, i.e. a curve lying in a plane, which is topologically equivalent to a unit circle, i.e. is a homeomorphic image of the unit circle. Such a simple closed plane curve does not intersect itself.

In a further embodiment of the *N*-phase transformer assembly according to the invention, the soft-magnetic core structure is shaped as a toroid, in particular as a toroid with a rectangular cross-section, with the toroid having an axis of revolution passing through the central hole, wherein each opening of the *N* openings through the toroid-shaped soft-magnetic core structure (i) comprises a respective axis of symmetry passing through said opening and (ii) connects an outer region outside the soft-magnetic core structure to the central hole, wherein the *N* axes of symmetry lie in a common plane, which common plane is substantially orthogonal to the axis of revolution, and wherein the *N* axes of symmetry are angularly spaced from each other by 360°/*N*.

The toroid surrounds the central hole. Each opening is symmetric with respect to the axis of symmetry passing through said opening. Each opening is such that a closed-loop magnetic path exists around said opening.

In a further embodiment of the *N*-phase transformer assembly according to the invention, *N* is equal to three and the central hole is shaped as a right prism with two opposite at least three-sided polygon bases, wherein a shape of a convex hull of the soft-magnetic core structure is similar to the shape of the central hole, and wherein each opening of the three openings passing through the soft-magnetic core structure (i) comprises a respective axis of symmetry passing through said opening and (ii) connects an outer region outside the convex hull to the central hole, wherein the three axes of symmetry lie in a common plane, which common plane is substantially orthogonal to a joining edge of the right prism, and wherein the three axes of symmetry are angularly spaced from each other by 120°.

In a further embodiment of the *N*-phase transformer assembly according to the invention, *N* is equal to three and the polygon base is a six-sided polygon base.

In a further embodiment of the *N*-phase transformer assembly according to the invention, *N* is equal to three and the three primary windings are connected in a star connection or in a delta connection, and/or the three secondary windings are connected in a star connection or in a delta connection, and/or optionally the three tertiary windings are connected in a star connection or in a delta connection.

According to a second aspect of the invention, the invention relates to an *N*-phase LLC resonant converter, in particular bidirectional *N*-phase LLC resonant converter, comprising (i) a first switching structure, (ii) a resonant tank connected to the first switching structure, (iii) an *N*-phase transformer assembly according to the invention, which *N*-phase transformer assembly is connected to the resonant tank through its *N* primary windings, (iv) a second switching structure, which second switching structure is connected to the N-phase transformer assembly through the *N* secondary windings of the *N*-phase transformer assembly, and optionally (v) a third switching structure, which third switching structure is connected to the *N*-phase transformer assembly through the *N* tertiary windings of the *N-*phase transformer assembly.

The second switching structure may also be embodied as a rectifier structure in case of a unidirectional *N*-phase LLC resonant converter. In case of a bidirectional *N*-phase LLC resonant converter, the first switching structure and the second switching structure may be embodied in a similar manner, in particular as half-bridge or full-bridge inverter structures. The *N*-phase LLC resonant converter may be used in a battery-electric vehicle or a hybrid-electric vehicle, for example. The *N*-phase LLC resonant converter according to the second aspect of the invention may generally be used in applications requiring high power efficiency and high power density, for example in applications for powering servers of large data centres.

Other advantageous embodiments and combinations of features come out from the detailed description below and the entirety of the claims.

### Brief description of the drawings

The drawings used to explain the embodiments show:
- Fig. 1: shows schematic cross-sectional views through a first embodiment of a two-phase transformer assembly and of a three-phase transformer assembly:
- Fig. 2: shows schematic cross-sectional views through a second embodiment of a two-phase transformer assembly and of a three-phase transformer assembly;
- Fig. 3: shows schematic cross-sectional views through different embodiments of a two-phase transformer assembly;
- Fig. 4: shows schematic cross-sectional views through different embodiments of a three-phase transformer assembly;
- Fig. 5: shows three views of a three-phase transformer assembly;
- Fig. 6: shows steps in the manufacture of the three-phase transformer assembly of Fig. 5;
- Fig. 7: shows two views of a three-phase transformer assembly;
- Fig. 8: shows steps in the manufacture of the three-phase transformer assembly of Fig. 7;
- Fig. 9: shows cross-sectional views through a three-phase transformer assembly with a toroidal soft-magnetic core structure and through a three-phase transformer assembly with a hollow prismatic soft-magnetic core structure;
- Fig. 10: shows three views of the three-phase transformer assembly of Fig. 9a;
- Fig. 11: shows steps in the manufacture of the three-phase transformer assembly of Figs. 9a and 10; and
- Fig. 12: shows a schematic circuit representation of a one-phase LLC resonant converter and of an *N*-phase LLC resonant converter.

In the figures, the same components are given the same reference symbols.

### Preferred embodiments

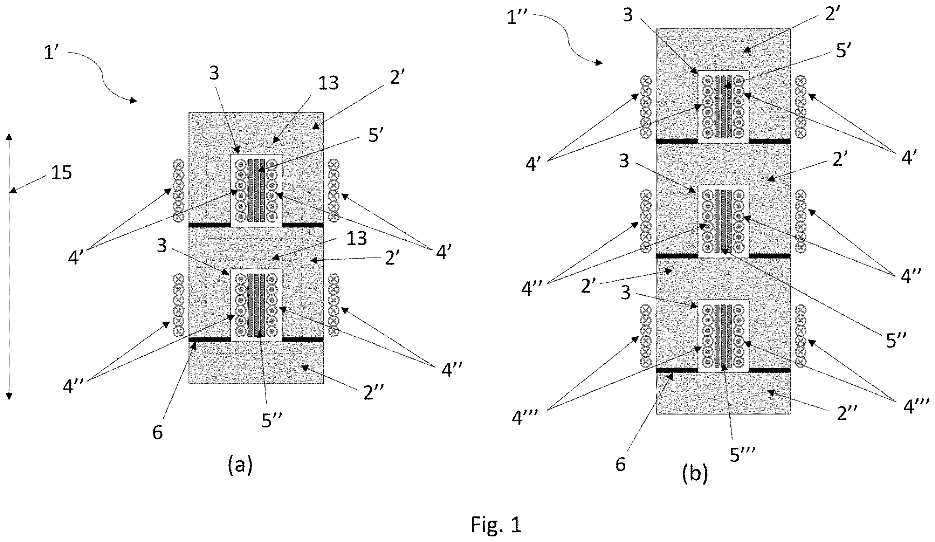

**Fig. 1a** shows a schematic cross-sectional view through a first embodiment of a two-phase transformer assembly 1'. The two-phase transformer assembly 1' of Fig. 1a is assembled from two U-shaped soft-magnetic core structure elements 2' and one I-shaped soft-magnetic core structure element 2". These three core structure elements 2', 2" are assembled along a main direction of extent 15, specifically in the order of U-shaped core structure element 2', U-shaped core structure element 2' and I-shaped soft-magnetic core structure element 2". The soft-magnetic core structure 2', 2" extends along the main direction of extent 15, which main direction of extent 15 is drawn for visualisation purposes next to the soft-magnetic core structure 2', 2". The soft-magnetic core structure elements 2', 2" of Fig. 1a may be embodied as ferrite cores, for example. The two U-shaped core structure elements 2' are arranged such that the two legs of one U-shaped core structure element 2' face the yoke of the other U-shaped core structure element 2', and the I-shaped core structure element 2" faces the two legs of this other U-shaped core structure element 2'.

Between the two U-shaped core structure elements 2', more specifically between the two legs of the one U-shaped core structure element 2' and the yoke of the other U-shaped core structure element 2', two air gaps are arranged. Air gaps 6 are also arranged between the two legs of the other U-shaped core structure element 2' and the I-shaped core structure element 2". In Fig. 1a, four air gaps are present in total. In general, instead of four air gaps as shown in Fig. 1a, a different number of air gaps may be used as well. Instead of few large air gaps, for example, more small air gaps could be used. By suitably dimensioning the four air gaps 6, two magnetising inductances are provided for a two-phase LLC resonant converter.

The two-phase transformer assembly 1' comprises two openings 3 passing through the soft-magnetic core structure 2', 2", which openings 3 are a consequence of the shape of the used core structure elements 2', 2" and of their relative arrangement with respect to each other. The specific arrangement of core structure elements 2', 2" of Fig. 1a provides for a closed-loop magnetic path 13 around each of the two openings 3.

The two-phase transformer assembly 1' comprises two phases: a first phase associated with a first primary winding 4' and a first secondary winding 5' and a second phase associated with a second primary winding 4" and a second secondary winding 5". The first primary winding 4' is wound around the two legs of the one U-shaped core structure element 2', and the second primary winding 4" is wound around the two legs of the other U-shaped core structure element 2'. The section of the first primary winding 4' wound around one leg of the two legs may be connected in series with the section of the first primary winding 4' wound around the other leg of the two legs, or these two sections of the first primary winding 4' may be connected in parallel.

The first secondary winding 5' and the second secondary winding 5" are not wound around the soft-magnetic core structure 2', 2". Instead, the first secondary winding 5' passes straight through one opening 3 and the second secondary winding 5" passes straight through the other opening 3. The first secondary winding 5' and the second secondary winding 5" are both formed of a plurality of electrically conductive strips/laminations that are arranged in parallel to each other. In the schematic cross-sectional view of Fig. 1a, three laminations are shown for illustrative purposes. Between the electrically conductive strips, electrically insulating material is arranged. Accordingly, the two secondary windings 5', 5" thus can have a sufficiently large cross-section to facilitate the flow of large currents through the secondary windings, and at the same time eddy current in the secondary windings 5', 5" may be mitigated, which eddy currents may be caused by rapid switching of switches of a two-phase LLC resonant converter in which the two-phase transformer assembly 1' may be used. Preferentially, the secondary windings 5', 5" may extend in the main direction of extent 15 along a similar length as the corresponding primary windings 4', 4" as graphically indicated in Fig. 1a. By suitably distancing the secondary windings 5', 5" from their corresponding primary windings 4', 4", two resonant inductances are provided for a two-phase LLC resonant converter.

**Fig. 1b** shows a schematic cross-sectional view through a first embodiment of a three-phase transformer assembly 1". The three-phase transformer assembly 1" of Fig. 1b is structurally similar to the two-phase transformer assembly 1' of Fig. 1a and comprises three U-shaped soft-magnetic core structure elements 2', one I-shaped soft-magnetic core structure element 2" and six air gaps 6. In general, instead of six air gaps as shown in Fig. 1b, a different number of air gaps may be used as well. Instead of few large air gaps, for example, more small air gaps could be used. Three primary windings 4', 4", 4‴ are wound around the six legs of the three U-shaped core structure elements 2', and three secondary windings 5', 5", 5‴ pass straight through the three openings 3.

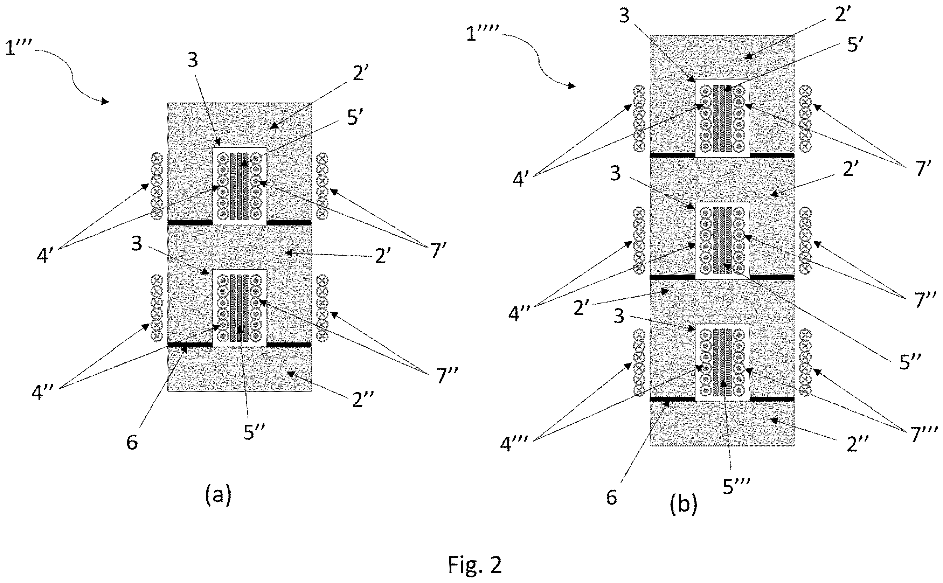

**Fig. 2a** and **Fig. 2b** are structurally similar to Fig. 1a and Fig. 1b, respectively. The second embodiment of Fig. 2 differs from the first embodiment of Fig. 1 in that two tertiary windings 7', 7" in Fig. 2a and three tertiary windings 7', 7", 7‴ in Fig. 2b are present. Compared to Fig. 1a, in Fig. 2a the first primary winding 4' is only wound around one leg of a U-shaped core structure element 2', and a first tertiary winding 7' is wound around the other leg of the U-shaped core structure element 2'. Compared to Fig. 1a, in Fig. 2a the second primary winding 4" is only wound around one leg of a U-shaped core structure element 2', and a second tertiary winding 7" is wound around the other leg of the U-shaped core structure element 2'. Fig. 2b differs in a similar manner from Fig. 1b.

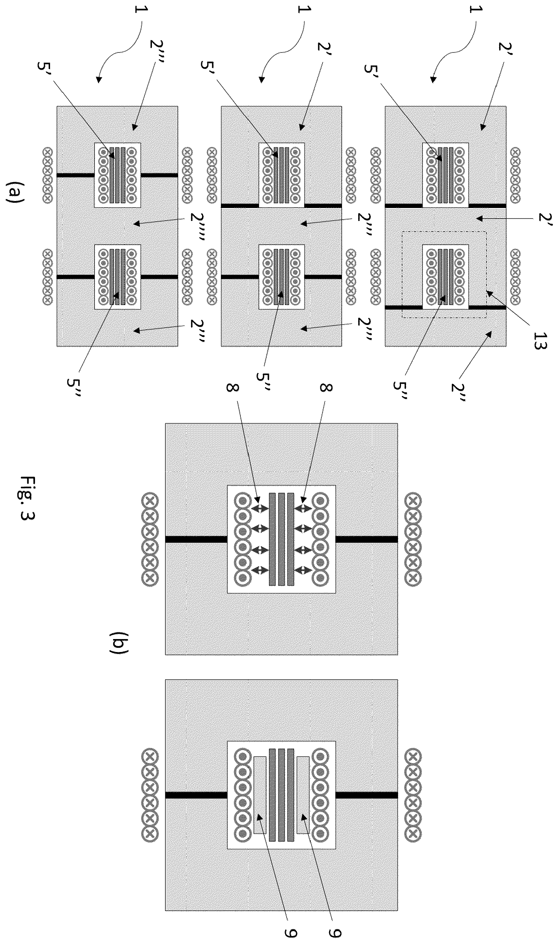

**Fig. 3a** shows different constructive embodiments of a two-phase transformer assembly 1. In the embodiment of Fig. 3a shown on top, two U-shaped soft-magnetic core structure elements 2' and one I-shaped soft-magnetic core structure element 2" are used. In the embodiment of Fig. 3a shown in the middle, one U-shaped core structure element 2' as in the embodiment on top and two U-shaped core structure elements 2‴ with shorter legs are used. In the embodiment of Fig. 3a shown at the bottom, two U-shaped core structure elements 2‴ with short legs as in the middle embodiment of Fig. 3a and one H-shaped core structure element 2ʺʺ are used. The windings may be embodied as in Fig. 1 or Fig. 2, i.e. either as primary windings and secondary windings as in Fig. 1, or as primary windings, secondary windings and tertiary windings as in Fig. 2.

In **Fig. 3b****,** it is shown how the secondary windings are distanced 8 from the primary windings or optionally also from the tertiary windings. Through such distance 8, a resonant inductance through leakage is provided. To make a transformer assembly more compact, soft-magnetic leakage-enhancing elements 9, in particular ferrite plates, may be placed between a secondary winding and a primary winding or optionally between a secondary winding and a tertiary winding. While the leakage-enhancing elements 9 of Fig. 3b are placed into an opening formed between two equal U-shaped core structure elements, the leakage-enhancing elements 9 may be placed into openings provided through other core structures as well.

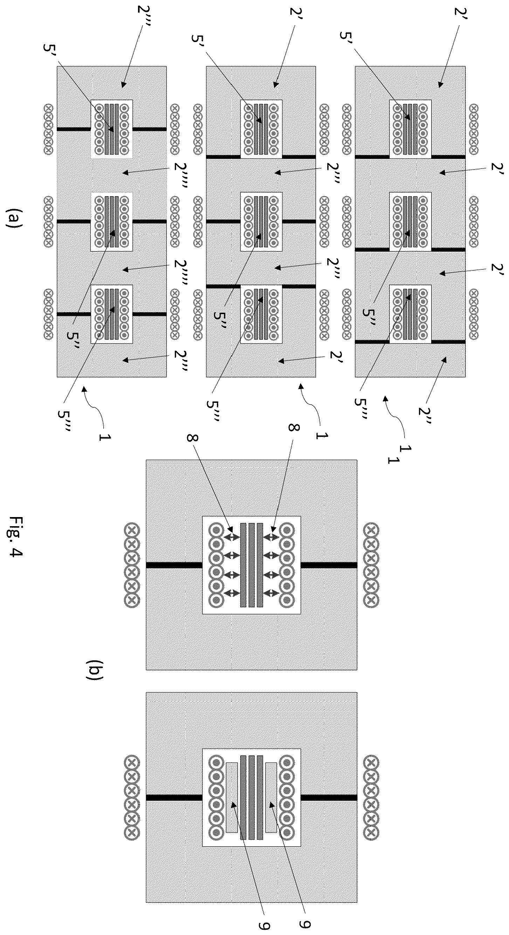

**Fig. 4a** shows different constructive embodiments of a three-phase transformer assembly 1. In the embodiment of Fig. 4a shown on top, three U-shaped soft-magnetic core structure elements 2' and one I-shaped soft-magnetic core structure element 2" are used. In the embodiment of Fig. 4a shown in the middle, two U-shaped core structure elements 2' as in the embodiment on top and two U-shaped core structure elements 2‴ with shorter legs are used. In the embodiment of Fig. 4a shown at the bottom, two U-shaped core structure elements 2‴ with short legs as in the middle embodiment of Fig. 4a and two H-shaped core structure elements 2ʺʺ are used. The windings may be embodied as in Fig. 1 or Fig. 2, i.e. either as primary windings and secondary windings as in Fig. 1, or as primary windings, secondary windings and tertiary windings as in Fig. 2. As indicated by **Fig. 4b****,** as in Fig. 3 leakage-enhancing elements 9 may be placed into the openings 3 to increase resonant inductances while making the three-phase transformer assembly more compact.

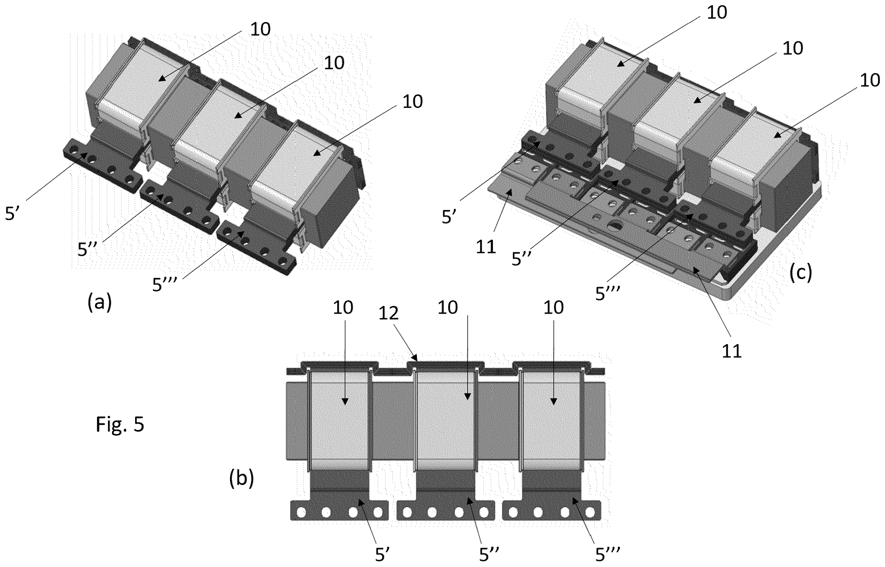

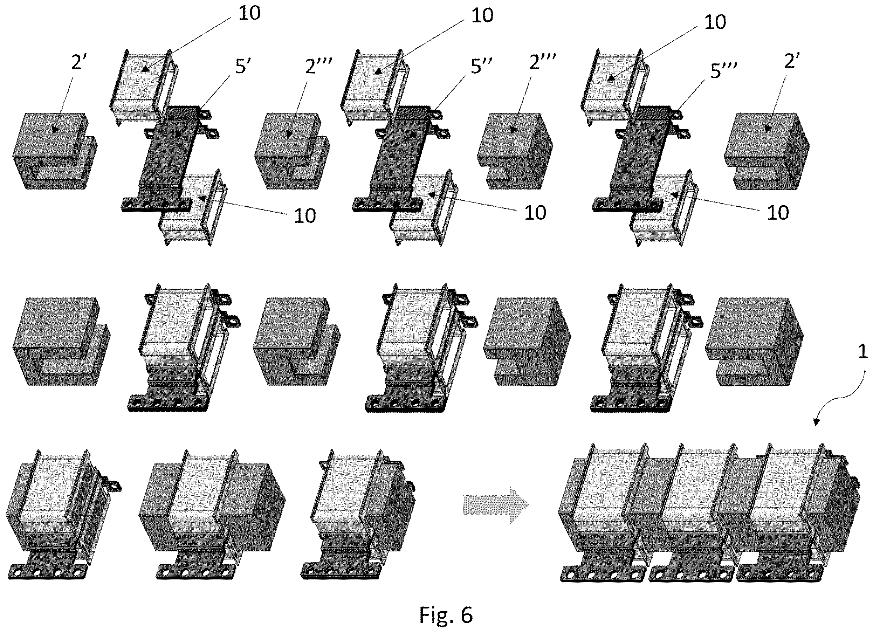

**Fig. 5** shows three views of a three-phase transformer assembly. Steps in the construction of the three-phase transformer assembly of Fig. 5 are shown in **Fig. 6****.** In Fig. 5a, a perspective view is shown, in Fig. 5b a view from above, and in Fig. 5c another perspective view of the three-phase transformer assembly with output connectors 11. The three secondary windings 5', 5", 5‴ are connected in a star connection with each other and comprise a spatially extended star point section 12 along one side of the three-phase transformer assembly, while output connectors 11 are arranged on the other side. The star point section 12 may be grounded, for example. At the output connectors 11, a rectified voltage and current may be present; the output connectors 11 may be connected to a low-voltage battery of a vehicle for charging the low-voltage battery, for example. Between the three secondary windings 5', 5", 5‴ and the output connectors 11, a second switching structure is arranged which is electrically connected to both the secondary windings 5', 5", 5‴ and the output connectors 11. Different second switching structures may be used, for example comprising active switches, or only diodes for rectification. In Fig. 5 and Fig. 6, the primary windings and optionally the tertiary windings are provided through edgewise-wound coils 10 that are placed over a soft-magnetic core structure. As shown in Fig. 6, the soft-magnetic core structure of Fig. 5 corresponds to the soft-magnetic core structure as shown in the middle embodiment of Fig. 4a.

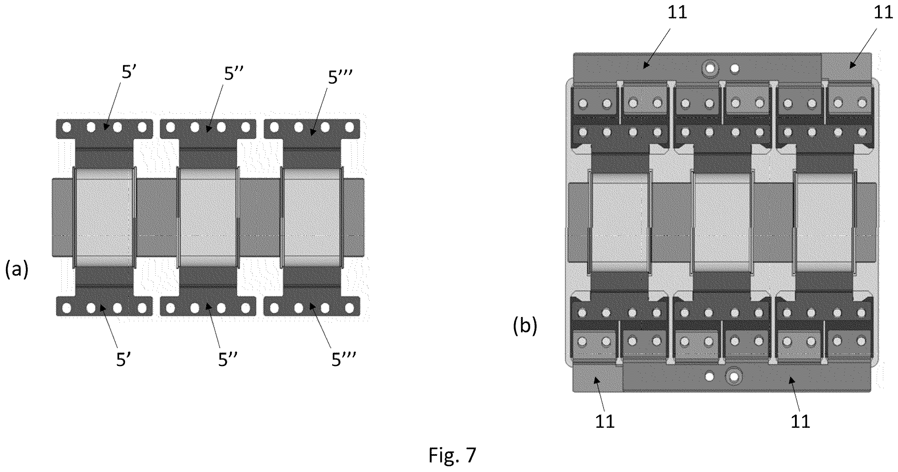

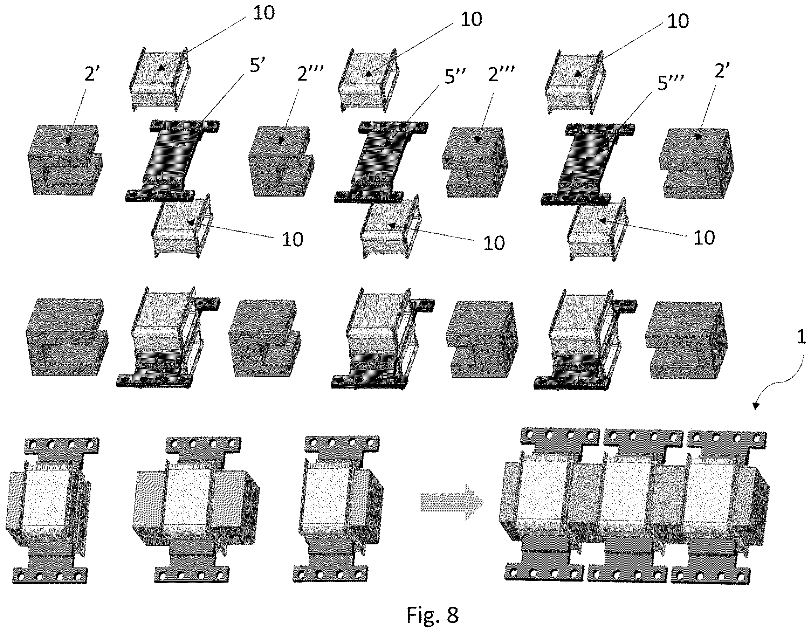

**Fig. 7** and **Fig. 8** correspond to Fig. 5 and Fig. 6, respectively, the main difference being that the secondary windings 5', 5", 5‴ are not connected in a star connection to each other and that output connectors 11 are arranged on both sides of the three-phase transformer assembly. Accordingly, switches of the second switching structure may therefore be arranged on both sides of the three-phase transformer assembly.

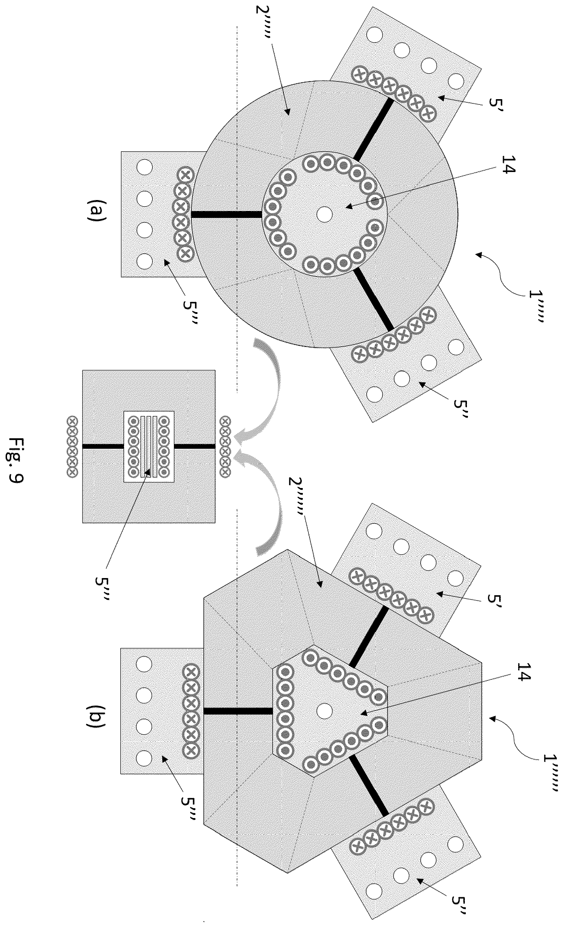

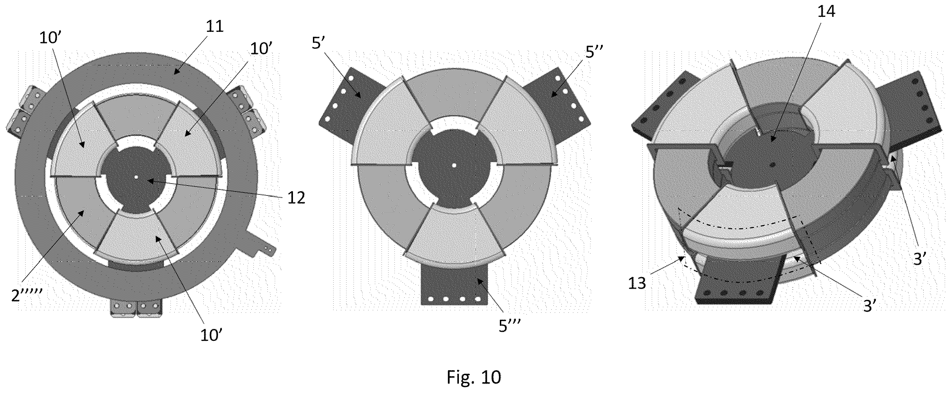

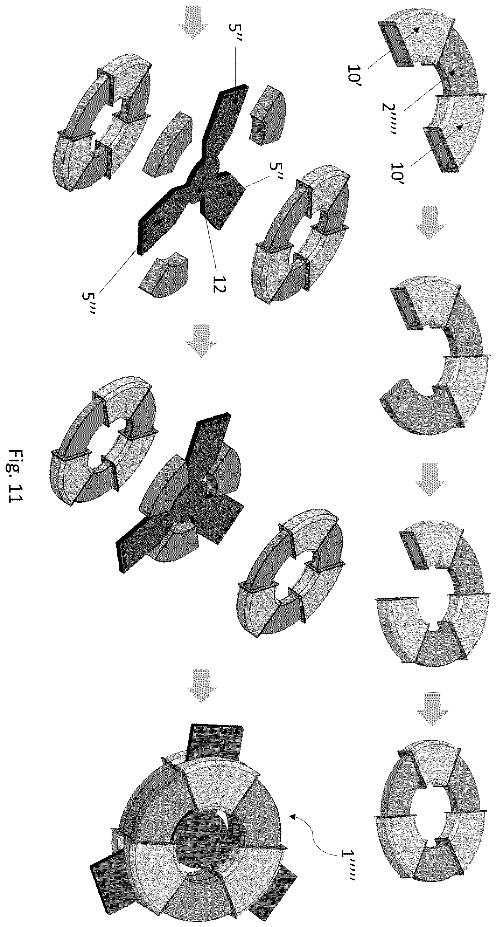

**Fig.** 9 shows cross-sectional views through a three-phase transformer assembly 1ʺ‴ with a toroidal soft-magnetic core structure 2ʺ‴ in Fig. 9a and through a three-phase transformer assembly 1‴‴ with a hollow prismatic soft-magnetic core structure 2‴‴ in Fig. 9b. A three-phase transformer assembly 1ʺ‴ corresponding to the cross-sectional view of Fig. 9a is shown in **Fig. 10****,** and steps in the manufacture of the three-phase transformer assembly of Fig. 10 are shown in **Fig. 11****.**

The soft-magnetic core structure 2ʺ‴, 2‴‴ of both Fig. 9a and Fig. 9b surrounds a central hole 14. The cross-sectional views of Fig. 9a and Fig. 9b correspond to a plane passing through the three secondary windings 5', 5", 5‴, which three secondary windings 5', 5", 5‴ are connected in a star connection to each other. In Fig. 9, a further cross-sectional view through both the three-phase transformer assembly of Fig. 9a and through the three-phase transformer assembly of Fig. 9b is shown, wherein this further cross-sectional view corresponds to a cut of the three-phase transformer assemblies along the dashed line shown in Fig. 9a and Fig. 9b. In this further cross-sectional view, the third secondary winding 5‴ is shown which passes through an opening connecting the respective outside of the three-phase transformer assemblies to their respective central holes 14.

The central hole 14 of the three-phase transformer assembly of Fig. 9b has the form of a right prism with two hexagonal bases. The convex hull of the soft-magnetic core structure 2‴‴ of the three-phase transformer assembly 1‴‴ of Fig. 9b, i.e. the smallest convex set surrounding the soft-magnetic core structure, is similar to the right prism, i.e. differs from the right prism of the central hole 14 only by a scaling factor.

In Fig. 10, the star point section 12 is visible where the three secondary windings 5', 5", 5‴ are connected to each other. Edgewise-wound coils are placed over soft-magnetic core structure elements which in turn provide the toroidal soft-magnetic core structure 2ʺ‴. Between an output connector 11 and the secondary windings 5', 5", 5‴, a second switching structure is arranged as shown on the left of Fig. 10. On the right of Fig. 10, two openings 3' are visible through which secondary windings pass. Around each of the three openings of the three-phase transformer assembly of Fig. 10, a closed-loop magnetic path 13 is present which passes through soft-magnetic core structure elements and air gaps as indicated in Fig. 9, Fig. 10 and Fig. 11.

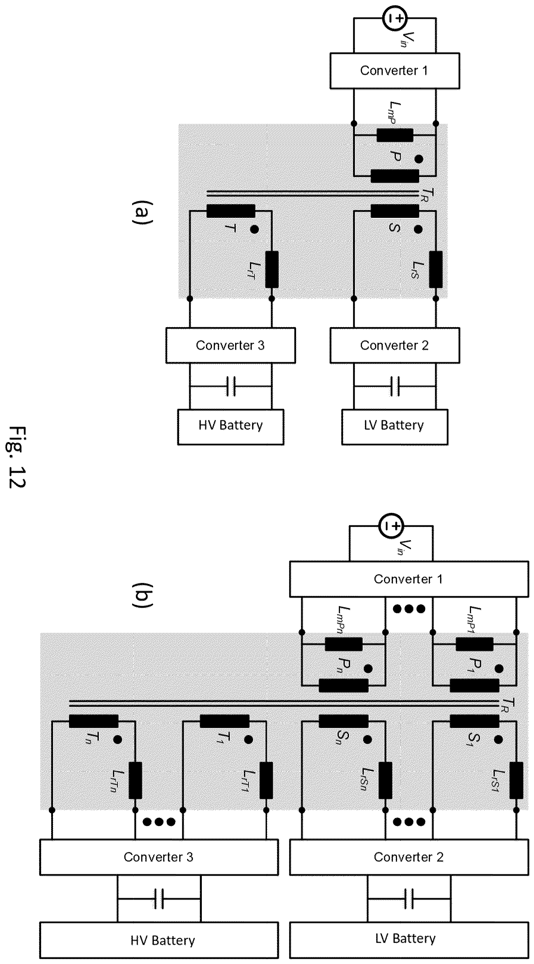

**Fig. 12** shows a schematic circuit representation of a one-phase LLC resonant converter in Fig. 12a and of an *N*-phase LLC resonant converter in Fig. 12b. Those parts of Fig. 12a and of Fig. 12b highlighted in grey can be provided by transformer assemblies according to the invention. The DC power source labelled with V_{IN} in Fig. 12a is connected to a switching structure and to a resonance capacitor, and next to a one-phase transformer assembly according to the invention. The DC power source labelled with V_{IN} in Fig. 12b is connected to a switching structure and to *N* resonance capacitors, and next to an *N*-phase transformer assembly according to the invention. For *N* phases as shown in Fig. 12b, after the switching structure, the signals entering into the *N* primary windings ideally have phase offsets of 0°, 360°/*N*, 2*360°/*N*, ..., (*N*-1)*360°/*N*. For each phase, a corresponding secondary and tertiary output is provided.

In the circuit representation of Fig. 12, all resonance inductances are moved to the secondary S respectively the tertiary T side. The *N* secondary sides S are connected via a second converter comprising a second switching structure to a low-voltage battery LV, and the *N* tertiary sides T are connected via a third converter comprising a third switching structure to a high-voltage battery HV. The second switching structure and the third switching structure may provide rectification. The first switching structure in the first converter, the second switching structure in the second converter and the third switching structure in the third converter may be such that a bidirectional or a unidirectional LLC resonant converter is provided.

## Claims

1. *N*-phase transformer assembly (1, 1'-1‴‴) with *N* phases for an *N*-phase LLC resonant converter, with *N* being a natural number greater than or equal to one, the *N*-phase transformer assembly (1, 1'-1‴‴) comprising
(i) a soft-magnetic core structure (2'-2‴‴), which soft-magnetic core structure comprises *N* openings (3, 3') passing through the soft-magnetic core structure and a closed-loop magnetic path (13) around each of the *N* openings (3, 3'), wherein at least one air gap (6) is present within the soft-magnetic core structure (2'-2‴‴), and
(ii) *N* primary windings (4', 4", 4‴) and *N* secondary windings (5', 5", 5‴), with the *N* primary windings and the *N* secondary windings corresponding to a) each other in a bijective manner, to b) the *N* openings (3, 3') in a bijective manner and to c) the *N* phases in a bijective manner, wherein each primary winding of the *N* primary windings (4', 4", 4‴) is wound in such a way around the soft-magnetic core structure (2'-2‴‴) that it passes through the corresponding opening (3, 3'), wherein the *N* secondary windings (5', 5", 5‴) are not wound around the soft-magnetic core structure (2'-2‴‴) and each secondary winding of the *N* secondary windings (5', 5", 5‴) passes through the corresponding opening (3, 3'), wherein the corresponding primary winding and corresponding secondary winding pass through a same opening of the *N* openings (3, 3') and are part of a same phase of the *N* phases, and wherein for each phase of the *N* phases,
(iii) the corresponding primary winding is distanced from the corresponding secondary winding to provide through leakage a resonant inductance for a resonant tank of the LLC resonant converter, and
(iv) the soft-magnetic core structure is designed to provide a magnetising inductance for the resonant tank of the LLC resonant converter.

2. *N-*phase transformer assembly (1, 1'-1‴‴) according to claim 1, wherein each secondary winding of the *N* secondary windings (5', 5", 5‴) passes once through the corresponding opening.

3. *N*-phase transformer assembly (1, 1'-1‴‴) according to claim 1 or 2, wherein each secondary winding of the *N* secondary windings (5', 5", 5‴) is formed by a plurality of parallel electrically conductive strips, in particular eight electrically conductive strips, wherein between any two parallel electrically conductive strips an electrically insulating material is present.

4. *N*-phase transformer assembly (1, 1'-1‴‴) according to any one of the preceding claims, further comprising *N* tertiary windings (7', 7", 7‴), which *N* tertiary windings (7', 7", 7‴) correspond to (i) the *N* phases in a bijective manner, to (ii) the *N* primary windings (4', 4", 4‴) and the *N* secondary windings (5', 5", 5‴) in a bijective manner and to (iii) the *N* openings (3, 3') in a bijective manner, wherein each tertiary winding of the *N* tertiary windings (7', 7", 7‴) is wound in such a way around the soft-magnetic core structure (2'-2""") that it passes through the corresponding opening, wherein the corresponding primary winding, the corresponding secondary winding and the corresponding tertiary winding pass through the same opening of the *N* openings (3, 3') and are part of the same phase of the *N* phases.

5. *N*-phase transformer assembly (1, 1'-1‴‴) according to any one of the preceding claims, wherein the *N* primary windings (4', 4", 4‴) and optionally the *N* tertiary windings (7', 7", 7‴) are made of enamelled wire, or wherein the *N* primary windings (4', 4", 4‴) and optionally the *N* tertiary windings (7', 7", 7‴) are made of Litz wire, in particular triple-insulated Litz wire, or wherein the *N* primary windings (4', 4", 4‴) and optionally the *N* tertiary windings (7', 7", 7‴) are provided as edgewise-wound coils (10).

6. *N*-phase transformer assembly (1, 1'-1‴‴) according to any one of the preceding claims, wherein soft-magnetic leakage-enhancing elements (9) are placed into at least one opening of the *N* openings (3, 3') between the primary windings passing through the at least one opening and the secondary windings passing through the at least one opening, and wherein optionally soft-magnetic leakage-enhancing elements (9) are placed into at least one opening of the *N* openings (3, 3') between the secondary windings passing through the at least one opening and the tertiary windings passing through the at least one opening.

7. *N*-phase transformer assembly (1, 1'-1ʺʺ) according to any one of the preceding claims, wherein the soft-magnetic core structure (2'-2ʺʺ) comprises a main direction of extent (15), wherein the main direction of extent (15) passes through the *N* openings (3).

8. *N*-phase transformer (1, 1'-1ʺʺ) assembly according to claim 7, wherein the soft-magnetic core structure (2'-2ʺʺ) comprises a plurality of soft-magnetic core structure elements, which soft-magnetic core structure elements are arranged consecutively along the main direction of extent (15) so that each soft-magnetic core structure element of the plurality of soft-magnetic core structure elements comprises one or two neighbouring soft-magnetic core structure elements of the plurality of soft-magnetic core structure elements, and wherein each opening of the *N* openings (3) is formed by two neighbouring soft-magnetic core structure elements of the plurality of soft-magnetic core structure elements.

9. *N*-phase transformer assembly (1, 1'-1ʺʺ) according to claim 8, wherein at least one opening of the *N* openings (3) is provided by two neighbouring U-shaped soft-magnetic core structure elements (2', 2‴), wherein each of the two neighbouring U-shaped soft-magnetic core structure elements comprises two legs and a yoke, and wherein the two neighbouring U-shaped soft-magnetic core structure elements are arranged such that the yoke of one of the two neighbouring U-shaped soft-magnetic core structure elements faces the two legs of the other of the two neighbouring U-shaped soft-magnetic core structure elements.

10. *N*-phase transformer assembly (1, 1'-1ʺʺ) according to claim 8 or 9, wherein at least one opening of the *N* openings (3) is provided by two neighbouring U-shaped soft-magnetic core structure elements (2‴), wherein each of the two neighbouring U-shaped soft-magnetic core structure elements comprises two legs and a yoke, and wherein the two neighbouring U-shaped soft-magnetic core structure elements are arranged such that their respective two legs face each other.

11. *N*-phase transformer assembly (1, 1'-1ʺʺ) according to claim 8, 9 or 10, wherein at least one opening of the *N* openings (3) is provided by a U-shaped soft-magnetic core structure element (2') and an I-shaped soft-magnetic core structure element (2"), wherein the U-shaped soft-magnetic core structure element comprises two legs and a yoke, and wherein the U-shaped soft-magnetic core structure element and the I-shaped soft-magnetic core structure element are arranged such that the two legs of the U-shaped soft-magnetic core structure element face the I-shaped soft-magnetic core structure element.

12. *N*-phase transformer assembly (1) according to any one of claims 7 to 11, wherein at least one opening of the *N* openings (3) is provided by (i) an H-shaped soft-magnetic core structure element (2ʺʺ) and (ii) a neighbouring U-shaped soft-magnetic core structure element (2‴) or a neighbouring further H-shaped soft-magnetic core structure element (2ʺʺ), wherein the H-shaped soft-magnetic core structure element (2ʺʺ) comprises four legs and one yoke.

13. *N*-phase transformer assembly (1, 1", 1ʺʺ) according to any one of the preceding claims, with *N* being equal to three.

14. *N*-phase transformer assembly (1ʺ‴, 1‴‴) according to any one of claims 1 to 6, wherein the soft-magnetic core structure (2ʺ‴, 2‴‴) extends along a simple closed plane curve and surrounds a central hole (14).

15. *N*-phase transformer assembly (1ʺ‴) according to claim 14, wherein the soft-magnetic core structure (2ʺ‴) is shaped as a toroid, in particular as a toroid with a rectangular cross-section, with the toroid having an axis of revolution passing through the central hole (14), wherein each opening of the *N* openings (3') through the toroid-shaped soft-magnetic core structure (2ʺ‴) (i) comprises a respective axis of symmetry passing through said opening (3') and (ii) connects an outer region outside the soft-magnetic core structure (2ʺ‴) to the central hole (14), wherein the *N* axes of symmetry lie in a common plane, which common plane is substantially orthogonal to the axis of revolution, and wherein the *N* axes of symmetry are angularly spaced from each other by 360°/*N*.

16. *N*-phase transformer assembly (1‴‴) according to claim 14, with *N* being equal to three, wherein the central hole (14) is shaped as a right prism with two opposite at least three-sided polygon bases, wherein a shape of a convex hull of the soft-magnetic core structure (2‴‴) is similar to the shape of the central hole (14), and wherein each opening of the three openings passing through the soft-magnetic core structure (2‴‴) (i) comprises a respective axis of symmetry passing through said opening and (ii) connects an outer region outside the convex hull to the central hole (14), wherein the three axes of symmetry lie in a common plane, which common plane is substantially orthogonal to a joining edge of the right prism, and wherein the three axes of symmetry are angularly spaced from each other by 120°.

17. Three-phase transformer assembly (1‴‴) according to claim 16, wherein the polygon base is a six-sided polygon base.

18. *N*-phase transformer assembly (1, 1", 1ʺʺ, 1ʺ‴, 1‴‴) according to any one of claims 13 to 17, with *N* being equal to three, wherein the three primary windings (4', 4", 4‴) are connected in a star connection or in a delta connection, and/or wherein the three secondary windings (5', 5", 5‴) are connected in a star connection or in a delta connection, and/or wherein optionally the three tertiary windings (7', 7", 7‴) are connected in a star connection or in a delta connection.

19. *N*-phase LLC resonant converter, in particular bidirectional *N*-phase LLC resonant converter, comprising (i) a first switching structure, (ii) a resonant tank connected to the first switching structure, (iii) an *N*-phase transformer (1, 1'-1‴‴) assembly according to any one of the preceding claims, which *N*-phase transformer assembly is connected to the resonant tank through its *N* primary windings (4', 4", 4‴), (iv) a second switching structure, which second switching structure is connected to the *N*-phase transformer assembly through the *N* secondary windings (5', 5", 5‴) of the *N*-phase transformer assembly, and optionally (v) a third switching structure, which third switching structure is connected to the *N*-phase transformer assembly through the *N* tertiary windings (7', 7", 7‴) of the *N*-phase transformer assembly.
